# EUROPEAN PATENT SPECIFICATION

(11) **EP 4 525 081 B1**
(45) Date of publication and mention of the grant of the patent: **04.11.2026**
(21) Application number: 23899519.5
(22) Date of filing: 11.09.2023
(51) Int. Cl.: H01M 4/36, C01G 51/42, C01G 51/80, H01M 4/131, H01M 4/485, H01M 4/525, H01M 10/0525

(54) **POSITIVE ELECTRODE ACTIVE MATERIAL AND USE THEREOF**
POSITIVELEKTRODENAKTIVMATERIAL UND VERWENDUNG DAVON
MATÉRIAU ACTIF D'ÉLECTRODE POSITIVE ET SON UTILISATION

(30) Priority: 06.12.2022 CN 202211557834
(43) Date of publication of application: 19.03.2025
(73) Proprietor: Zhuhai CosMX Battery Co., Ltd., Zhuhai, Guangdong 519180 (CN)
(72) Inventor: ZENG, Jiajiang, Zhuhai, Guangdong 519180 (CN); XIA, Dingguo, Zhuhai, Guangdong 519180 (CN); LI, Suli, Zhuhai, Guangdong 519180 (CN)
(74) Representative: Vossius & Partner Patentanwälte Rechtsanwälte mbB
(86) International application number: PCT/CN2023/117910
(87) International publication number: WO 2024/119936

(56) References cited:
- WO-A1-2009/001557
- CN-A- 103 189 316
- CN-A- 113 540 591
- CN-A- 115 275 171
- CN-A- 115 295 789
- CN-A- 115 732 661

## Description

This application claims priority to Chinese Patent Application No. 202211557834.3, filed with the China National Intellectual Property Administration on December 6, 2022, entitled "POSITIVE ELECTRODE ACTIVE MATERIAL AND USE THEREOF".

### TECHNICAL FIELD

The present application relates to an electrode material, especially to a positive electrode active material and use thereof, belonging to the technical field of secondary batteries.

### BACKGROUND

With the development and advancement of lithium ion battery technology, higher and higher requirements are put forward on its capacity. In the composition of lithium ion battery, the level of the capacity of the positive electrode active material plays a crucial role in the capacity of lithium ion battery.

In order to improve the capacity of lithium ion battery, a most commonly used method is to increase its charging and discharging voltage. However, with the increase of voltage, the positive electrode active material will experience a phenomenon of collapse of crystal structure, which in turn leads to a series of problems such as rapid capacity degradation and a significant reduction in the cycle performance of the battery.

Therefore, development of a positive electrode active material for lithium ion battery with high specific capacity and good cycle performance is a technical problem to be solved in this field.
CN 115 295 789 A discloses a positive electrode active material and use thereof, where the positive electrode active material includes a lithium metal oxide as shown in Formula 1 or Formula 2; in an X-ray diffraction spectrum, the lithium metal oxide has a Cmca space group of a cubic lattice system, and has a 002 peak at 2θ of 17.9°-18.1°, and a 131 peak at 2θ of 67.0°-67.5°.
CN 113 540 591 A discloses a lithium supplement method for a lithium ion battery. The method comprises the following steps: adding a lithium supplement material into a positive electrode of a lithium ion battery, extracting part of active lithium in the lithium supplement material to supplement lithium in a first charging process, and after the capacity of the lithium ion battery is reduced to a certain degree, further extracting the active lithium in the lithium supplement

### SUMMARY

The present invention is set out in the appended set of claims.

The present application provides a positive electrode active material, which helps to improve the specific capacity and cycle performance of a battery, and especially can still make the battery perform well even under a high voltage condition.

The present application provides a positive electrode sheet, which includes the above-described positive electrode active material, and thus contributes to improving related electrical performance of a battery.

The present application also provides a lithium ion battery including the above-described positive electrode sheet, and thus has excellent performance in terms of specific capacity and cycle performance.

The present application provides a positive electrode active material including a lithium metal oxide and a lithium-rich material;
the lithium metal oxide has a molecular formula represented by Formula 1 or Formula 2, and in an X-ray diffraction pattern, the lithium metal oxide is a space group Cmca of a cubic crystal system, and has a 002 peak at 2θ of 17.9°-18.1° and a 131 peak at 2θ of 67.0°-67.5°;

   Li_{n1-y1}Na_{y1}Co_{1-a1-b1}M1_{b1}M2ₐ₁O₂ Formula 1

   Li_{n2-y2-b2}Na_{y2}CO₁₋ₐ₂M1_{b2}M2ₐ₂O₂ Formula 2
in formula 1, 0.6 ≤ n1 ≤ 0.8, 0 < y1 ≤ 0.05, 0 ≤ a1 ≤ 0.1, 0< b1 ≤ 0.1, 0 < b1/1-a1-b1 < 0.1;
in formula 2, 0.6 ≤ n2 ≤ 0.8, 0 < y2 ≤ 0. 05, 0 ≤ a2 ≤ 0.1, 0 < b2 ≤ 0. 02,
where M1 includes at least one of Te, W, Al, B, P, and K; and M2 is a doping element different from M1;
the lithium-rich material includes at least one of Li₂NiO₂, Li₆FeO₆, Li₂MoO₃, Li₆CoO₄, Li₂CuO₂, Li₂O, Li₃N, LiF, Li₃AlO₄, Li₅FeO₄, Li₂C₂O₄.

In the positive electrode active material as described above, the positive electrode active material has a lithium-cobalt molar ratio m1, and m1 ≥ 0.95.

In the positive electrode active material as described above, 0.95≤m1≤1.5.

In the positive electrode active material as described above, content of the lithium-lithium-rich material in the mixture is 0.5-40% by mass, where the mixture includes the lithium metal oxide and the lithium-rich material.

In the positive electrode active material as described above, content of the lithium-rich material in the mixture is 5-25% by mass.

In the positive electrode active material as described above, the lithium-rich material is at least one of Li₂NiO₂, Li₆FeO₆.

In the positive electrode active material as described above, content of the lithium-rich material in the mixture is 9%-20% by mass.

In the positive electrode active material as described above, in the lithium metal oxide, a peak intensity of the 002 peak is I1, a peak intensity of the 131 peak is I2, I1/I2 ≥ 3.

In the positive electrode active material as described above, I1/I2 ≥ 4.

In the positive electrode active material as described above, I1/I2 ≥ 6.

In the positive electrode active material as described above, a surface of the lithium metal oxide is at least partially covered with a coating layer.

In the positive electrode active material as described above, the positive electrode active material has a Dv50 of 12- 20 µm.

In the positive electrode active material as described above, the lithium metal oxide has a median particle diameter Dv50 of 12-20 µm and the lithium-rich material has a median particle diameter Dv50 of 3-12 µm.

In the positive electrode active material as described above, a half-cell containing the lithium metal oxide has a discharge capacity ratio of C1/C0 ≥ 9% in a first stage and a discharge capacity ratio of C2/C0 ≥ 25% in a second stage;
where C0 is a discharge capacity of the half-cell containing the lithium metal oxide when a discharge treatment is performed at a voltage of 3.0 to 4.55 V; in the discharge treatment, a capacity discharged by the half-cell when the half-cell is discharged from an initial discharge voltage to 4.4 V is defined as C1, and a capacity discharged by the half-cell when the half-cell is discharged from 3.8 V to 3.7 V is defined as C2.

In the positive electrode active material as described above, a lithium-cobalt molar ratio of the positive electrode active material after charged and discharged is m2, m2 ≥ 0. 85.

In the positive electrode active material as described above, 0.85 ≤ m2 ≤ 1.1.

The present application provides a positive electrode sheet including the positive electrode active material according to any one of the above items.

In the positive electrode sheet as described above, a compacted density of a positive electrode active layer in the positive electrode sheet is greater than or equal to 3.5 g/cm³.

The present application also provides a lithium ion battery including the above-described positive electrode active material or positive electrode sheet.

In the lithium ion battery as described above, the negative electrode sheet in the lithium ion battery includes a stacked negative electrode current collector; and a negative electrode active layer and a lithium material layer, both of which are disposed on at least one surface of the negative electrode current collector, and the negative electrode active layer is adjacent to the negative electrode current collector.

In the lithium ion battery as described above, the negative electrode sheet further includes lithium metal.

In the lithium ion battery as described above, the working voltage of the lithium ion battery is ≥4.50 V.

The positive electrode active material of the present application includes a lithium-rich material and a lithium metal oxide having a special crystal phase structure and chemical composition, where the lithium-rich material can provide a sufficient lithium source to help improve the specific capacity of the lithium ion battery, and the lithium metal oxide can improve the structural stability of the positive electrode active material, which not only promotes the optimization of the cycle performance of the lithium ion battery, but also further improves the specific capacity of the lithium ion battery under high pressure conditions. Therefore, the positive electrode active material of the present application can significantly improve the cycle performance and gram capacity of the lithium ion battery, and even under high voltage conditions of 4.5 V or more, the lithium ion battery using the positive electrode active material can still maintain the excellent performance of related electrical properties, and the problem of structural collapse due to poor voltage resistance of the positive electrode active material will not occur.

### BRIEF DESCRIPTION OF DRAWINGS

FIG. 1 is an SEM diagram of lithium metal oxide 1 # of the present application.
FIG. 2 is an XRD diagram of lithium metal oxide 1 # of the present application.
FIG. 3 is an XRD diagram of lithium metal oxide 2 # of the present application.
FIG. 4 is an XRD diagram of lithium metal oxide 4 # of the present application.
FIG. 5 is a charge-discharge curve of a button cell assembled from the positive electrode active material of Example 1 according to the present application.

### DESCRIPTION OF EMBODIMENTS

In order to make the purpose, technical solutions, and advantages of the present application more clear, the technical solutions in the embodiments of the present application will be clearly and completely described below in conjunction with the examples of the present application, and it is obvious that the described embodiments are some of the embodiments of the present application, but not all of the embodiments. Based on the embodiments in the present application, all other embodiments obtained by those skilled in the art without creative work fall within the scope of protection of the present application.

A first aspect of the present application provides a positive electrode active material including a lithium metal oxide and a lithium-rich material;
the lithium metal oxide has a molecular formula shown in Formula 1, and in an X-ray diffraction pattern, the lithium metal oxide is a space group Cmca of a cubic crystal system, and has a 002 peak at 2θ of 17.9°-18.1° and a 131 peak at 2θ of 67.0°-67.5°;

   Li_{n1-y1}Na_{y1}Co_{1-a1-b1}M1_{b1}M2ₐ₁O₂ Formula 1

   Li_{n2-y2-b2}Na_{y2}Co₁₋ₐ₂M1_{b2}M2ₐ₂O₂ Formula 2
in formula 1, 0.6 ≤ n1 ≤ 0.8, 0 < y1 ≤ 0.05, 0 ≤ a1 ≤ 0.1, 0 < b1 ≤ 0.1, 0 < b1/1-a1-b1 < 0.1;
in the formula 2, 0.6 ≤ n2 ≤ 0. 8, 0 < y2 ≤ 0. 05, 0 ≤ a2 ≤ 0. 1, 0 < b2 ≤ 0.02,
where M1 includes at least one of Te, W, Al, B, P, and K; and M2 is a doping element different from M1;
the lithium-rich material includes at least one of Li₂NiO₂, Li₆FeO₆, Li₂MoO₃, Li₆CoO₄, Li₂CuO₂, Li₂O, Li₃N, LiF, Li₅AlO₄, Li₅FeO₄, and Li₂C₂O₄.

The lithium metal oxide described in the present application is a compound having a T2 phase packing structure, and specifically an oxide containing at least cobalt, lithium, sodium, and M1. Further, it may be doped with M2, and the present application does not limit the specific selection of M2, and M2 may be a common doping element in the art. For example, it may be at least one of elements W, Mg, Ti, Mn, Al, Te, Ni, Nb, Zr, La, F, Ce, Sr, Y, K, B, and P.

In the present application, y1, y2, a1, a2, b1, b2, etc. within the above-mentioned limits are not excessively limited.

For example, in Formula 1, y1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.03, 0.04, or 0.05; a1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09 or 0.095; b1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09 or 0.095; b1/1-a1-b1 is 0.005, 0.01, 0.02, 0.03, 0.04, 0.06, 0.08, 0.09, 0.095 or 0.1;
in Formula 2, y2 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.03, 0.04, or 0.05; a2 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09 or 0.095; b2 is 0.001, 0.002, 0.003, 0.004, 0.005, 0.006, 0.007, 0.008, 0.010, 0.012, 0.015, 0.018, 0.02.

It should be emphasized that n1 and n2 are parameters related to the lithium content in the positive electrode active material that has not been subjected to any charge/discharge treatment. It can be understood that after the positive electrode active material is applied to a lithium ion battery and subjected to any charge/discharge treatment, the molar amount of lithium per unit mole of lithium metal oxide is different under different charge/discharge mechanisms and charge/discharge nodes, and thus n1 and n2 will also change, and even not be within the above-mentioned limits.

The lithium-rich material described above of the present application specifically includes at least one of Li₂NiO₂, Li₆FeO₆, Li₂MoO₃, Li₆CoO₄, Li₂CuO₂, Li₂O, Li₃N, LiF, Li₂C₂O₄, Li₅AlO₄, Lᵢ₅FeO₄ and other compounds.

According to the above solution provided in the present application, compared with other positive electrode active materials, after the positive electrode active material including the above-described lithium metal oxide and the lithium-rich material is applied to the lithium ion battery, the specific capacity and cycle performance of the lithium ion battery are significantly improved compared with a conventionally used high-voltage positive electrode material such as lithium cobalt oxide, and the electrical performance of the lithium ion battery does not deteriorate even under high-voltage operating conditions. The inventor analyzed this phenomenon, and believed that it may be: on one hand, lithium metal oxide has a more perfect T2 structure, part of sodium element plays a supporting role in the structure, and the doping of M1 helps to further support the structure of lithium metal oxide. Therefore, regardless of normal pressure or high pressure working environment, this excellent structural stability enables lithium ions to have stable deintercalation efficiency in space group Cmca of cubic crystal system, and with the increase of working voltage, the deintercalation efficiency of lithium ions can also be stably improved, promoting the improvement of cycle performance and specific capacity of lithium ion battery. On the other hand, the lithium metal oxide with the above-mentioned doping elements and crystal characteristics has a more perfect layered crystal phase structure, which can reduce or suppress the occurrence of chaotic arrangements within the crystal phase, thereby enabling the smooth deintercalation of lithium ions, especially exhibiting multiple small charging and discharging platforms in the high-voltage charging and discharging process.

In addition, the characteristic of sufficient lithium source of the lithium-rich material can also increase the number of lithium ions for deintercalation in lithium ion battery, and also significantly promote the improvement of the specific capacity and cycle performance of lithium ion battery. It can be understood that when the positive electrode active material includes the above-described at least one lithium-rich material, it is certain that characteristic peaks of the lithium-rich materials can be detected by performing XRD detection on the positive electrode active material.

Further, a lithium-cobalt molar ratio of the positive electrode active material is m1, and m1 is ≥ 0. 95, further, m1 ≤ 1. 5. When the positive electrode active material is prepared and the lithium-cobalt molar ratio m1 is between 0.95 and 1.5, with the increase of the lithium-cobalt molar ratio, the improvement effect of specific capacity and cycle performance of lithium ion battery is more significant.

The lithium-cobalt molar ratio m1 in the present application refers to a ratio of an amount of substance of all lithium elements to an amount of substance of all cobalt elements in the active material of the positive electrode sheet during the process of preparing the positive electrode active material (or when there is no any charge/discharge treatment) (which can be calculated by the composition of the material at the time of preparation, or by performing ICP detection on the positive electrode active material after the completion of the preparation).

In a specific implementation of the present application, a mass content of the lithium-rich material in the mixture including the lithium-rich material and the lithium metal oxide is generally controlled to be 0.5% or more. The inventors found that as an amount of the lithium-rich material increases within a certain range, the first charge and discharge efficiency, specific capacity and cycle performance of the lithium ion battery all show an increasing trend first, and then basically remain unchanged. Therefore, for economic reasons, the mass content of the lithium-rich material in the mixture is generally 0.5%-40%.

Of course, when different lithium-rich materials, lithium metal oxides, and even different negative electrode materials and electrolytes are used, the cycle performance and specific capacity of the lithium ion battery will be affected. Therefore, generally speaking, for the above-mentioned different lithium-rich materials, lithium metal oxides, negative electrode materials, electrolytes, etc., when the mass content of the lithium-rich materials in the mixture is controlled to 5%-25%, especially when the lithium-rich materials are Li₂NiO₂, Li₆FeO₆, their contents are controlled at 9%-20%, which basically enables the lithium ion battery to have the optimal performance in terms of the specific capacity and cycle performance.

In an embodiment, in the lithium metal oxide, the peak intensity of the 002 peak is I1, the peak intensity of the 131 peak is 12, with I1/I2 ≥ 3. At this time, an internal crystal structure of the lithium metal oxide is more perfect, thus contributing to the improvement of cycle performance of the battery. Further, it is I1/I2 ≥ 4, and still further, 11/12 ≥ 6.

In addition to the positive promotion effect of the lithium metal oxide on the electrical properties related to the battery as described above, the performance of the battery is further improved when the surface of the lithium metal oxide is at least partially covered with a coating layer. By providing a coating layer, the positive electrode active material has a core-shell structure including the lithium metal oxide as inner core, and the coating layer covering the inner core. The coating layer helps to reduce or suppress the side reaction between the lithium metal oxide and the electrolyte, and even when the battery is operated in a high-pressure environment, a stable interface can still be formed between the lithium metal oxide and the electrolyte, so that the cycle performance of the battery can be improved by avoiding dissolution of transition metal ions from the positive electrode active ions and avoiding the phenomenon of liquid shortage. At the same time, the suppression or reduction of the side reaction can also reduce the gas production inside the battery, thereby ensuring the safety performance of the battery.

The present application does not limit the selection of material of the coating layer as long as side reactions can be suppressed and normal migration of lithium ions can be ensured. In order to further improve the conductivity of lithium ions, materials such as carbon-containing compounds and fast ion conductors can be used for the coating layer.

The positive electrode active material of the present application may have a single crystal morphology or a polycrystalline morphology, and the specific morphology is related to the selection and proportion of doping elements therein. Specifically, when it is in polycrystalline morphology, it is a spherical or spherical-like particle; when it is in single crystal morphology, it may be whisker, flake, or any other irregular shape. In a specific embodiment, the positive electrode active material has a Dv50 of 12-20 µm.

Further, a median particle diameter Dv50 of the lithium metal oxide is 12-20 µm, for example, 14 µm,15 µm,16 µm,17 µm,18 µm,19 µm,or 20 µm;

Further, a median particle diameter Dv50 of the lithium-rich material is 3-12 µm, for example, 3 µm, 4 µm, 5 µm, 8 µm, 9 µm, 10 µm, or 20 µm.

The inventor found that when the median particle diameter of the lithium metal oxide or the lithium-rich material meets the above requirements, on one hand, their corresponding specific surface areas can satisfy the deintercalation of more lithium ions; on the other hand, the agglomeration phenomenon between the positive electrode active materials is effectively controlled, so that the positive electrode active materials can be stably dispersed in a slurry in preparation of the slurry. Exemplarily, the median particle diameter Dv50 may be detected by a laser particle size analyzer.

It needs to be explained that the lithium metal oxide having Dv50 of 12-20 µm refers to a lithium metal oxide satisfying Formula 1, or a core-shell structure in which the surface of the lithium metal oxide represented by Formula 1 is at least partially coated with a coating layer.

The inventor found that when the lithium metal oxide satisfies the doping and doping ratio of a specific element M1, a plurality of discharge platforms in the charging and discharging process of a half-cell including the lithium metal oxide all exhibit a relatively excellent discharge capacity.

In a specific embodiment, a half-cell including lithium metal oxide has a discharge capacity ratio of C1/C0 ≥ 9% in a first stage and a discharge capacity ratio of C2/C0 ≥ 25% in a second stage; where C0 is discharge capacity of the half-cell including the lithium metal oxide when a discharge treatment is performed at a voltage of 3.0 to 4.55 V; in the discharge treatment, a capacity discharged by the half-cell when the half-cell is discharged from an initial discharge voltage to 4.4 V is defined as C1, and a capacity discharged by the half-cell when the half-cell is discharged from 3.8 V to 3.7 V is defined as C2. Further, it is C1/C0 ≥ 11%, and the discharge capacity ratio is C2/C0 ≥ 28% in the second stage.

It should be explained that the above discharge capacity is carried out under a special discharge mechanism. Specifically, a half-cell formed by a positive electrode sheet having the lithium metal oxide as a positive electrode active material and a lithium metal negative electrode is charged to an SOC of 100% (the charging mechanism is not particularly limited), and then a discharge treatment is performed at 0.1 C at 3.0 to 4.55 V. Where, when discharging from 4.55V at 0.1C to 4.4V, an amount of electricity released is C1, and when continuously discharging from 3.8V to 3.7V, an amount of electricity released in this voltage reduction stage is C2, and when continuously discharging to 3.0V (SOC is 0 at this time), a total amount of electricity released from the initial discharge is C0.

Obviously, in the discharge treatment in a high-voltage environment, the discharge capacity ratio in the first stage and the discharge capacity ratio in the second stage both perform well. Therefore, the lithium metal oxide in the positive electrode active material of the present application has strong voltage resistance, so that the specific capacity of the lithium ion battery can be increased by a voltage boost treatment.

As described above, in the lithium metal oxide that has not been subjected to any charge/discharge treatment, n is between 0.6 and 0.8, and in the positive electrode active material including the lithium metal oxide and the lithium-rich material, the molar ratio m1 of Li/Co is greater than or equal to 0.95, and further is 0.95-1.5. Where n and m1 can be calculated according to the composition of the material, or can be obtained by measuring and analyzing the prepared positive electrode active material by atomic absorption spectrometry (ICP).

After a positive electrode sheet including a positive electrode active material and a corresponding lithium-free negative electrode sheet are assembled into a half-cell and then charged and discharged, or a full battery assembled from the positive electrode sheet is discharged to 3.0 V at a rate of 0.1 C (voltage range is 3.0 to 3.6 V) after chemical formation (all without limiting the charging mechanism), a molar content ratio of Li/Co in the positive electrode sheet is m2, m2 ≥ 0. 85, further m2 is 0.85-1.1. Specifically, before discharging to 3.0 V at a rate of 0.1 C, the number of cycles of the full battery after chemical formation is not more than 10 cycles, further, no more than 5 cycles.

Specifically, in the full battery, the composition of the positive electrode active material including the above lithium metal oxide and the above lithium rich material will change after the charge and discharge application. The reason is that the lithium metal oxide with the above-mentioned crystalline structure has some vacancies, so when it is used for charging and discharging application, its vacancies can accept the lithium-rich material with sufficient lithium source. However, since lithium-deficient or a small amount of lithium-supplemented negative electrode material is commonly used in the negative electrode, some lithium ions are lost due to film formation when lithium passes through the negative electrode, and thus the molar amount of lithium ions is reduced compared with that before charging and discharging application. In the present application, by mixing the lithium metal oxide compound with the lithium-rich compound, the application range of the negative electrode material can be further expanded; at the same time, since the negative electrode material does not require the use of the lithium metal compound, the safety and expansion of the lithium ion battery including the positive electrode active material can be significantly improved.

When detecting the lithium-cobalt molar ratio in the positive electrode sheet of the battery after charging and discharging, the discharged battery is disassembled and the positive electrode sheet is taken out, the positive electrode sheet is immersed in dimethyl carbonate (DMC) for 1-3h or rinsed with DMC, naturally dried in a drying room, and placed in a muffle furnace at 300-600 °C for 2-5h, and then the active layer falls off from the current collector , sieved with 200 mesh to obtain a powder to be detected, and then the metal element in the powder to be detected is detected by ICP, to calculate the lithium-cobalt molar ratio.

The present application does not limit the method for producing the lithium metal oxide, and in a specific embodiment, the lithium metal oxide of the present application can be produced by a method in which a sodium metal oxide represented by formula 1a or 2a and a lithium compound are mixed and ion exchange treatment is performed:

Naₓ₁Co_{1-at-b1}M1_{b1}M2ₐ₁O₂ Formula 1a

Naₓ₂Co₁₋ₐ₂M1_{b2}M2ₐ₁O₂ Formula 2a

in formula 1a, 0.68 < x1 < 0.74, 0 < b1 < 0.1, 0 ≤ a < 0.10, 0 < b1/1-a1 < 0.05; and in formula 2a, 0.68 < x2 < 0.74, 0 < b2 < 0.02, and 0 ≤ a2 < 0.1.

The ion exchange treatment is a heat treatment process, and specifically, it refers to a heat treatment of no more than 10h at 80°C-300°C after mixing the sodium metal oxide and the lithium compound. After the ion exchange treatment, the system after ion exchange is washed and dried to finally obtain the lithium metal oxide. Where the drying temperature is 80-180°C, and the drying time is at least 10 h. The equipment for performing the ion exchange treatment and the drying equipment are not limited, for example, the equipment for the ion exchange treatment may be closed container equipment with a sealing function and a stirring ability, such as wet coating reaction equipment, co-precipitation reaction equipment, etc.; the drying equipment may be a blast oven, a vacuum drying oven, a rotary kiln, a tray drier, a baking oven, etc.

The lithium compound described above may be a lithium source compound commonly used in the art, and for example, at least one of lithium carbonate, lithium chloride, lithium bromide, lithium iodide, lithium nitrate, lithium hydroxide, and lithium fluoride. In the ion exchange treatment, the mass ratio of the lithium compound and the sodium metal oxide is not less than 1:1, preferably (1-3): 1.

Further, when it is necessary to prepare a positive electrode active material having a lithium metal oxide covered with a coating layer, it is necessary to add a coating layer raw material in addition to raw materials including a sodium metal oxide and a lithium compound in the ion exchange treatment.

For example, the sodium metal compound represented by Formula 1a or Formula 2a can be prepared by a method including the following procedures:
at least a cobalt source and a sodium source are mixed in a target ratio, and then calcined to obtain a sodium metal compound represented by formula 1a or formula 2a.

Specifically, the temperature of the calcination is 700-900 °C and the time of the calcination is 8-50 h, and the calcination may be performed in an oxygen or air atmosphere. Equipment for calcination may be, for example, a muffle furnace, a tunnel furnace, a roller kiln, a tube furnace and other high temperature calcinating equipment.

The mixing of the sources described above can be performed by a high-speed mixing apparatus, a sand milling apparatus, a ball milling apparatus, a coulter mixing apparatus, an inclined mixing apparatus, etc. It should be noted that when a sand milling apparatus or a ball milling apparatus is used and a solvent (water, ethanol, or other solvent medium) is added during the ball milling or sand milling process, the mixed system needs to be dried after completion of the mixing process. Generally, the mixing time is not more than 4 h.

The present application does not limit the specific selection of a cobalt source, a sodium source, a M1 source, and a M2 source. Exemplarily, the cobalt source is selected from one or more of cobalt hydroxide, tricobalt tetraoxide, doped tricobalt tetraoxide, cobaltous oxide, cobalt oxyhydroxide, cobalt nitrate, cobalt sulfate, etc.; the sodium source is selected from one or more of sodium carbonate, sodium nitrate, sodium hydroxide, sodium bicarbonate, sodium sulfate, etc.; the M1 source may be an oxide of M1, and when M1 is W, the source of M1 is, for example, tungstic acid and/or sodium tungstate; when M1 is Te, the M1 source is, for example, telluric acid and/or sodium tellurate, etc.; when M1 is Al, the M1 source is, for example, one or more of aluminum sulfate, aluminum nitrate, aluminum hydroxide, etc.; when M1 is B, the M1 source is, for example, boric acid and/or sodium borate, etc.; when M1 is P, the M1 source is, for example, phosphoric acid and/or sodium phosphate, etc.; when M1 is K, the M1 source is, for example, one or more of potassium carbonate, potassium nitrate, potassium hydroxide, potassium bicarbonate, potassium sulfate, etc.; the M2 source may be an oxide of M2, for example, one or more of basic magnesium carbonate, magnesium hydroxide, zirconia, yttria, lanthanum oxide, lanthanum fluoride, nickel oxide, niobium oxide, etc.

A second aspect of the present application provides a positive electrode sheet including the positive electrode active material according to the first aspect.

Based on the characteristics of the positive electrode active material of the first aspect, the positive electrode sheet of the present application contributes to improving cycle performance and specific capacity of the lithium ion battery.

The present application does not limit a specific structure of the positive electrode sheet. For example, the positive electrode sheet of the present application includes a positive electrode current collector and a positive electrode active layer provided on at least one surface of the positive electrode current collector, and the positive electrode active layer includes the above-described positive electrode active material. It can be understood that in addition to the positive electrode active material, the positive active layer also includes a conductive agent and a binder. Exemplarily, the positive electrode active layer includes 70-99 wt% of the positive electrode active material, 0.5-15 wt% of the conductive agent, and 0.5-15 wt% of the binder; and further, it includes 80-98 wt% of the positive electrode active material, 1-10 wt% of the conductive agent, and 1-10 wt% of the binder.

The selections of the conductive agent and the binder are not specially limited, and can be a conventional selection in this field. For example, the conductive agent is selected from at least one of conductive carbon black, acetylene black, Ketjen black, conductive graphite, conductive carbon fiber, carbon nanotube, single-walled carbon nanotube, multi-walled carbon nanotube, and carbon fiber, and the binder is selected from at least one of polyvinylidene fluoride (PVDF), polytetrafluoroethylene (PTFE), and lithium polyacrylate (PAALi).

Further, in order to improve the safety performance, a safety layer may be disposed between the positive electrode active layer and the current collector. A material of the safety layer is generally a non-conductive safety material, such as iron-containing compound (such as lithium iron phosphate, lithium phosphate, etc.), aluminum-containing compound (such as ceramic alumina), etc. Of course, an adhesive is also included in the safety layer, and a ratio of the adhesive to the safety material can be determined according to specific need.

In some embodiments of the present application, the cycle performance and specific capacity of the battery can be further improved when the positive active layer has a compaction density of greater than or equal to 3.5 g/cm³.

A third aspect of the present application provides a lithium ion battery including the positive electrode active material of the first aspect or the positive electrode sheet of the second aspect, and thus the lithium ion battery exhibits outstanding cycle performance and specific capacity.

The present application does not limit a specific structure of the lithium ion battery, and for example, the lithium ion battery may be a square case battery, a cylindrical battery, etc.

In addition to the positive electrode sheet, the lithium ion battery of the present application further includes a negative electrode sheet, a separator, and an electrolyte.

Exemplarily, the electrolyte is a conventional electrolyte known in the art including a lithium salt and a solvent containing ethylene carbonate (abbreviated as EC), diethyl carbonate (abbreviated as DEC), propylene carbonate (abbreviated as PC), fluoroethylene carbonate (abbreviated as FEC). Further, it also includes an additive shown in Formula T, whose mass percentage content in the electrolyte is 0.1-10%, etc.

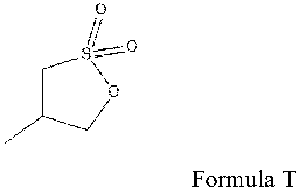

Exemplarily, the negative electrode sheet includes a stacked negative electrode current collector and a negative electrode active layer provided on one or both sides of the negative electrode current collector. In a specific embodiment, the negative electrode active layer includes 70-99 wt% of negative electrode active material, 0.5-15 wt% of conductive agent, 0.5-15 wt% of binder according to mass percentage; and further it includes 80-98 wt% of negative electrode active material, 1-10 wt% of conductive agent, 1-10 wt% of binder. Where the negative electrode active material is selected from one or more of artificial graphite, natural graphite, hard carbon, mesocarbon microbeads, lithium titanate, silicon carbon, and silicon monoxide.

Further, the negative electrode sheet may be a lithium metal negative electrode including lithium metal.

In a specific implementation, based on the lithium replenishment characteristics of the lithium-rich material in the positive electrode active material, when one or more of artificial graphite, natural graphite, hard carbon, mesophase carbon microspheres, lithium titanate, silicon carbon, and silicon monoxide are selected as the negative electrode active material to prepare a negative electrode sheet, it is more conducive to improve the safety performance of the battery than a lithium metal negative electrode.

Exemplarily, the separator is a polypropylene based material, or an adhesive coated separator coated with ceramic on one or both sides of the polypropylene based material.

The lithium ion battery of the present application is suitable for high-voltage systems, and specifically, has excellent energy density and cycle performance at a voltage of ≥ 4. 50 V. Therefore, the lithium ion battery of the present application has good cycle stability and high gram capacity at higher voltages such as 4.50V, and can meet the demand for thin and light use of high-end digital products.

Hereinafter, the technical solutions of the present application will be further explained and illustrated with reference to specific examples.

### Lithium metal oxide 1 #

The preparation method of lithium metal oxide 1 # is as follows.

In examples 1 to 13 of the present application, a method for preparing a lithium metal oxide 1 in the positive electrode sheet is as follows:
1) Weight 36.56 kg of sodium carbonate powder, 0.21 kg of potassium carbonate powder and 291.05 kg of cobalt nitrate hexahydrate powder, put them into high-speed mixing equipment, set a mixing program as mixing at 300rpm for 3 minutes, mixing at 500rpm for 5 minutes, and then mixing at 1000rpm for 10 minutes, take out the mixture, and when confirming that there is no white sodium carbonate spot in the mixture, the mixture is considered to be uniform;
2) Take about 30kg of the uniformly mixed mixture, uniformly load it into a ceramic crucible in batches; use a pit-type muffle furnace with equipment model VBF-1200X for high-temperature sintering, with temperature rise curve of the sintering being 5°C/min, and when temperature rising to 750°C, constant-temperature sintering for 10h; naturally lower the temperature to normal temperature after sintering, and then take out the sample to obtain a sintered compound Na_{0.69}K_{0.003}CoO₂ containing cobalt and sodium;
3) Weigh 1.049 g of lithium hydroxide monohydrate and 34.47 g of lithium nitrate particles, respectively add the two lithium compounds into a reaction vessel; weight 10g of the compound Na_{0.69}K_{0.003}CoO₂ containing cobalt and sodium synthesized in step 2), pour it into the reaction vessel for preliminary mixing, and then perform ion exchange at 280 °C for 0.5 h to obtain a crude product; and
4) wash the crude product by suction filtration for 3 times with deionized water, dry it in a blast drying oven set at 90°C for 8h to obtain the lithium metal oxide 1#, which corresponds to the chemical formula Li_{0.71}Na_{0.02}K_{0.003}CoO₂.

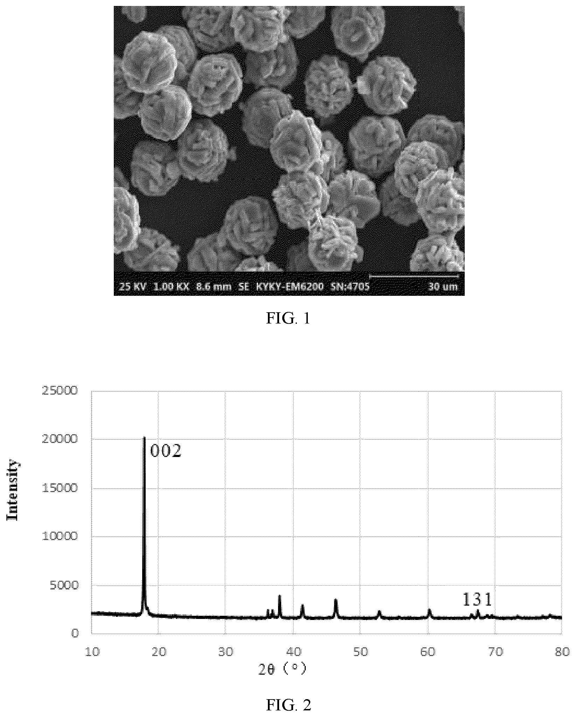

FIG. 1 is a SEM diagram of lithium metal oxide 1 # of the present application. It can be seen from the diagram that the particle diameter of the material is 13-17 µm, and the actual measured particle size Dv50 of the sample is 14.7 µm.

FIG. 2 is an XRD diagram of lithium metal oxide 1 # of the present application.

The lithium metal oxide 1 # was applied to the positive electrode active materials of examples 1-13.

The preparation methods of lithium metal oxides 2#-6# are basically the same as the preparation method of lithium metal oxide 1#, the difference lies in the selection of different metal sources in step 1) as well as the mass of different metal sources, and the specific differences are shown in Table 1. Where, lithium metal oxide 2# was applied to the positive electrode active material of Example 14 and its actually measured particle size Dv50 was 15.23 µm, lithium metal oxide 3# was applied to the positive electrode active material of Example 15 and its actually measured particle size Dv50 was 14.92 µm, lithium metal oxide 4# was applied to the positive electrode active material of Example 16 and its actually measured particle size Dv50 was 15.1 µm, lithium metal oxide 5# was applied to the positive electrode active material of Example 17 and its actually measured particle size Dv50 was 14.87 µm, and lithium metal oxide 6# was applied to the positive electrode active material of Example 18 and its actually measured particle size Dv50 was 15.5 µm.

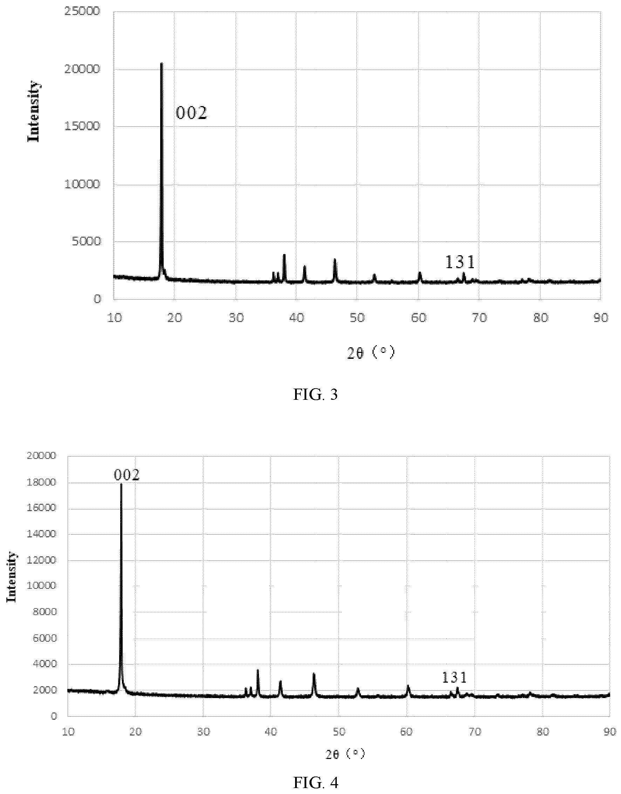

FIG. 3 is an XRD diagram of lithium metal oxide 2# of the present application, and FIG. 4 is an XRD diagram of lithium metal oxide 4# of the present application. In addition, the ratio I1/I2 of the peak intensity I1 of the 002 peak and the peak intensity I2 of the 131 peak of the lithium metal oxides 1#-6# is shown in Table 3.

**Table 1**

| Lithium metal oxide | Composition of compound containing cobalt and sodium | Na₂CO₃ | Co(NO₃)₂*6H₂O | H₃BO₃ | WO₂ | K₂CO₃ | MgO | TiO₂ | Al₂O₃ |
|---|---|---|---|---|---|---|---|---|---|
| | | g | | | | | | | |
| 1#Li_{0.71}Na_{0.02}K_{0.003}CoO₂ | Na_{0.69}K_{0.003}CoO₂ | 36.56 | 291.05 | | | 0.21 | | | |
| 2#Li_{0.71}Na_{0.02}Co_{0.97}Al_{0.03}O₂ | Na_{0.69}Co_{0.97}Al_{0.03}O₂ | 36.56296 | 282.3185 | | | | | | 1.5294 |
| 3#Li_{0.71}Na_{0.02}K_{0.005}Co_{0.97}Mg_{0.03}O₂ | Na_{0.69}K_{0.005}Co_{0.97}Mg_{0.03}O₂ | 36.56296 | 282.3185 | | | 0.345515 | 1.20915 | | |
| 4#Li_{0.71}Na_{0.02}K_{0.003}Co_{0.97}Ti_{0.03}O₂ | Na_{0.69}K_{0.003}Co_{0.97}Ti_{0.03}O₂ | 36.56296 | 282.3185 | | | 0.207309 | | 2.39601 | |
| 5#Li_{0.71}Na_{0.02}Co_{0.96}B_{0.04}O₂ | Na_{0.69}Co_{0.96}B_{0.04}O₂ | 36.563 | 279.408 | 2.472 | | | | | |
| 6#Li_{0.71}Na_{0.02}Co_{0.96}W_{0.04}O₂ | Na_{0.69}Co_{0.96}W_{0.04}O₂ | 36.563 | 279.408 | | 8.63356 | | | | |

The lithium-rich materials are commercially obtained Li₂NiO₂, Li₅FeO₄, Li₆CoO₄, Li₂O, Li₃N, LiF, Li₂C₂O₄, each of which was subjected to the following crushing pretreatment: weighing 1 kg of the lithium-rich material, placing it into high-speed mixing equipment, setting a mixing program as mixing the material at 300 rpm for 3 minutes, mixing the material at 500 rpm for 5 minutes, and then mixing the material at 1000 rpm for 10 minutes and then taking it out, stirring the material with a sample spoon to make the material turn over again, repeating the above procedure for mixing it once more to obtain the lithium-rich material with median particle diameter Dv50 of 3-12µm, ready for use.

### Example 1

The positive electrode active material of this example was prepared as follows:
Weigh 100 g of lithium metal oxide 1#Li_{0.71}Na_{0.02}K_{0.003}CoO₂ and also 19.94 g of lithium-rich material Li₂NiO₂ subjected to the above crushing pretreatment, put them into high-speed mixing equipment, set a mixing program as mixing the materials at 300 rpm for 1 minute, mixing the materials at 500 rpm for 2 minutes, and then mixing the materials at 1000 rpm for 10 minutes, then take out the mixed material and after confirming that the mixed material is uniform, consider the mixed material being mixed uniformly, take out the mixed material, to obtain the positive electrode active material of Example 1. Table 2 includes the relevant parameters of the positive electrode active material, where m1_{theory} is a lithium-cobalt molar ratio calculated from respective masses of raw materials including the lithium metal oxide and the lithium-rich material when preparing the positive electrode active material, m1_{actual} is a lithium-cobalt molar ratio obtained by ICP detection of the finally obtained positive electrode active material.

### Example 2

The positive electrode active material of this example was prepared as follows:
Weigh 100 g of lithium metal oxide 1#Li_{0.71}Na_{0.02}K_{0.003}CoO₂ and also 21.08 g of lithium-rich material Li₂NiO₂ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 2. The relevant parameters are shown in Table 2.

### Example 3

The positive electrode active material of the present example was prepared as follows:
Weigh 100 g of lithium metal oxide 1# Li_{0.71}Na_{0.02}K_{0.003}CoO₂ and also 20.32 g of lithium-rich material Li₂NiO₂ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 2. The relevant parameters are shown in Table 2.

### Example 4

The positive electrode active material of the present example was prepared as follows:
Weigh 100 g of lithium metal oxide 1# Li_{0.71}Na_{0.02}K_{0.003}CoO₂ and also 9.86 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 4. The relevant parameters are shown in Table 2.

### Example 5

The positive electrode active material of the present example was prepared as follows:
Weigh 100 g of lithium metal oxide 1#Li_{0.71}Na_{0.02}K_{0.003}CoO₂ and also 10.39 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 5. The relevant parameters are shown in Table 2.

### Example 6

The positive electrode active material of the present example was prepared as follows:
Weigh 100 g of lithium metal oxide 1#Li_{0.71}Na_{0.02}K_{0.003}CoO₂ and also 10.56 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 6. The relevant parameters are shown in Table 2.

### Example 7

The positive electrode active material of the present example was prepared as follows:
Weigh 100 g of lithium metal oxide 1#Li_{0.71}Na_{0.02}K_{0.003}CoO₂ and also 17.2 g of lithium-rich material Li₆CoO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 7. The relevant parameters are shown in Table 2.

### Example 8

The positive electrode active material of the present example was prepared as follows:
Weigh 100 g of lithium metal oxide 1# Li_{0.71}Na_{0.02}K_{0.003}CoO₂ and also 17.99 g of lithium-rich material Li₆CoO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 8.

### Example 9

The positive electrode active material of the present example was prepared as follows:
Weigh 100 g of lithium metal oxide 1#Li_{0.71}Na_{0.02}K_{0.003}CoO₂ and also 17.34 g of lithium-rich material Li₆CoO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 9. The relevant parameters are shown in Table 2.

### Example 10

The positive electrode active material of the present example was prepared as follows:
Weigh 100 g of lithium metal oxide 1#Li_{0.71}Na_{0.02}K_{0.003}CoO₂ and also 9.94 g of lithium-rich material Li₂O subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 10. The relevant parameters are shown in Table 2.

### Example 11

The positive electrode active material of the present example was prepared as follows:
Weigh 100 g of lithium metal oxide 1#Li_{0.71}Na_{0.02}K_{0.003}CoO₂ and also 5.84 g of lithium-rich material Li₃N subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 11. The relevant parameters are shown in Table 2.

### Example 12

The positive electrode active material of the present example was prepared as follows:
Weigh 100 g of lithium metal oxide 1#Li_{0.71}Na_{0.02}K_{0.003}CoO₂ and also 14.73 g of lithium-rich material LiF subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 12. The relevant parameters are shown in Table 2.

### Example 13

The positive electrode active material of the present example was prepared as follows:
Weigh 100 g of lithium metal oxide 1#Li_{0.71}Na_{0.02}K_{0.003}CoO₂ and also 13.04 g of lithium-rich material Li₂C₂O₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 13. The relevant parameters are shown in Table 2.

### Example 14

The positive electrode active material of the present example was prepared as follows:
Weigh 100 g of lithium metal oxide 2#Li_{0.71}Na_{0.02}Co_{0.97}Al_{0.03}O₂ and also 9.35 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 14. The relevant parameters are shown in Table 2.

### Example 15

The positive electrode active material of the example was prepared as follows:
Weigh 100 g of lithium metal oxide 3# Li_{0.71}Na_{0.02}K_{0.005}Co_{0.97}Mg_{0.03}O₂ and also 9.36 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 15. The relevant parameters are shown in Table 2.

### Example 16

The positive electrode active material of the present example was prepared as follows:
Weigh 100 g of lithium metal oxide 4# Li_{0.71}Na_{0.02}K_{0.003}Co_{0.97}Ti_{0.03}O₂ and also 9.51 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 16. The relevant parameters are shown in Table 2.

### Example 17

The positive electrode active material of the present example was prepared as follows:
Weigh 100 g of lithium metal oxide 5# Li_{0.71}Na_{0.02}Co_{0.96}W_{0.04}O₂ and also 9.61 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 17. The relevant parameters are shown in Table 2.

### Example 18

The positive electrode active material of the present example was prepared as follows:
Weigh 100 g of lithium metal oxide 6# Li_{0.71}Na_{0.02}Co_{0.96}W_{0.04}O₂ and also 9.42 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 18. The relevant parameters are shown in Table 2.

### Example 19

The positive electrode active material of the example was prepared as follows:
Weigh 100 g of lithium metal oxide 1# Li_{0.71}Na_{0.02}K_{0.003}CoO₂ and also 0.3 g of lithium-rich material Li₅FeO₄ subjected to the above crushing pretreatment, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Example 19. The relevant parameters are shown in Table 2.

### Comparative example 1

The positive electrode active material of the present comparative example is lithium metal oxide 1 #. The relevant parameters are shown in Table 2.

### Comparative example 2

The positive electrode active material of the present comparative example was prepared as follows:
Weigh 100 g of lithium metal oxide 1 # Li_{0.71}Na_{0.02}K_{0.003}CoO₂ and 12.0 g of Li₂CO₃, put them into high-speed mixing equipment, set a mixing program as mixing the materials at 300 rpm for 1 minute, mixing the materials at 500 rpm for 2 minutes, and then mixing the materials at 1,000 rpm for 10 minutes, then take out the mixture and after confirming that the mixture is uniform, consider the mixture being mixed uniformly; take out the mixture to obtain the positive electrode active material of Comparative example 2. The relevant parameters are shown in Table 2.

**Table 2**

| | Lithium metal oxide | Lithium-rich material | Ratio of lithium-rich material to mixture by mass | m1_{theory} | m1 _{actual} |
|---|---|---|---|---|---|
| Example 1 | Li_{0.71}Na_{0.02}K_{0.003}CoO₂ | Li₂NiO₂ | 0.1994 | 1.0773 | 1.0725 |
| Example 2 | Li_{0.71}Na_{0.02}K_{0.003}CoO₂ | Li₂NiO₂ | 0.2108 | 1.0983 | 1.0993 |
| Example 3 | Li_{0.71}Na_{0.02}K_{0.003}CoO₂ | Li₂NiO₂ | 0.2032 | 1.0843 | 1.0856 |
| Example 4 | Li_{0.71}Na_{0.02}K_{0.003}CoO₂ | Li₅FeO₄ | 0.0986 | 1.0174 | 1.0112 |
| Example 5 | Li_{0.71}Na_{0.02}K_{0.003}CoO₂ | Li₅FeO₄ | 0.1039 | 1.0337 | 1.0286 |
| Example 6 | Li_{0.71}Na_{0.02}K_{0.003}CoO₂ | Li₅FeO₄ | 0.1056 | 1.0392 | 1.0346 |
| Example 7 | Li_{0.71}Na_{0.02}K_{0.003}CoO₂ | Li₆CoO₄ | 0.1702 | 1.1891 | 1.1932 |
| Example 8 | Li_{0.71}Na_{0.02}K_{0.003}CoO₂ | Li₆CoO₄ | 0.1799 | 1.2139 | 1.2178 |
| Example 9 | Li_{0.71}Na_{0.02}K_{0.003}CoO₂ | Li₆CoO₄ | 0.1734 | 1.1974 | 1.1995 |
| Example 10 | Li_{0.71}Na_{0.02}K_{0.003}CoO₂ | Li₂O | 0.0994 | 1.3508 | 1.2706 |
| Example 11 | Li_{0.71}Na_{0.02}K_{0.003}CoO₂ | Li₃N | 0.0584 | 1.1944 | 1.1928 |
| Example 12 | Li_{0.71}Na_{0.02}K_{0.003}CoO₂ | LiF | 0.1473 | 1.2570 | 1.2503 |
| Example 13 | Li_{0.71}Na_{0.02}K_{0.003}CoO₂ | Li₂C₂O₄ | 0.1304 | 0.9565 | 0.9589 |
| Example 14 | Li_{0.7}1Na_{0.02}Co_{0.97}Al_{0.03}O₂ | Li₅FeO₄ | 0.0935 | 0.9984 | 0.9907 |
| Example 15 | Li_{0.71}Na_{0.02}K_{0.005}Co_{0.97}Mg_{0 .03}O₂ | Li₅FeO₄ | 0.0936 | 0.9991 | 0.9935 |
| Example 16 | Li_{0.71}Na_{0.02}K_{0.003}Co_{0.97}Ti_{0.0 3}O₂ | Li₅FeO₄ | 0.0951 | 1.0056 | 1.0004 |
| Example 17 | Li_{0.71}Na_{0.02}Co_{0.96}W_{0.04}O₂ | Li₅FeO₄ | 0.0960 | 1.0032 | 1.0067 |
| Example 18 | Li_{0.71}Na_{0.02}Co_{0.96}W_{0.04}O₂ | Li₅FeO₄ | 0.0942 | 1.0188 | 1.0182 |
| Example 19 | Li_{0.71}Na_{0.02}K_{0.003}CoO₂ | Li₅FeO₄ | 0.003 | 0.7193 | 0.7138 |
| Comparative example 1 | Li_{0.71}Na_{0.02}K_{0.003}CoO₂ | / | / | 0.71 | 0.7138 |
| Comparative example 2 | Li_{0.71}Na_{0.02}K_{0.003}CoO₂ | Li₂CO₃ | 0.12 | 1.0228 | 1.0183 |

### Test example 1

After the lithium metal oxides 1#-6# each were made into a positive electrode sheet, and then were assembled together with a negative electrode sheet, an electrolyte and a separator in accordance with the following method to obtain a button cell. The method includes:
Each lithium metal oxide was mixed with conductive carbon black (SP) and PVDF at a weight ratio of 80%:10%:10%, and a positive electrode slurry was obtained by dispersing. The slurry was coated on an aluminum foil current collector, and roll-pressed to obtain a positive electrode sheet. Then, the positive electrode sheet was punched with a mould to form a small disc with a diameter of 12 mm. After drying and weighing, it was assembled together with a 2025 button cell case, Li metal disc as negative electrode and a conventional high voltage lithium cobaltate as electrolyte in a glove box under Ar protective atmosphere to obtain the button cell.

Each obtained button cell was left to standing for 4 h in a conventional environment, and then was subjected to a charge and discharge capacity test for first time. The test conditions are as below: charging to 4.55 V at 0.1 C, constant voltage charging to 0.025 C and cutting off, standing for 3 minutes, and then discharging to 3.0 V at 0.1 C. During the discharge process, discharge capacity C1 of 4.4-4.55V, discharge capacity C2 of 3.7-3.8V, and full capacity C0 of first-time discharge were recorded respectively. The discharge capacity ratio C1/C0 in the first stage and the discharge capacity ratio C2/C0 in the second stage were calculated. The results are shown in Table 3.

In addition, the button cell was subjected to discharge cycle test at 0.5 C in the range of 3.0 - 4.55 V, and the capacity retention rate Q1 after 50T was tested. The results are shown in Table 3.

### Test example 2

After the positive electrode active materials in all the Examples and Comparative examples were each made into a positive electrode sheet, and then were assembled together with a negative electrode sheet, an electrolyte, and a separator according to the following method to obtain a lithium ion battery. The method includes:
1) The positive electrode active materials in the Examples and Comparative examples were each mixed with conductive carbon black and PVDF at a weight ratio of 96%: 2%:2%, respectively, and dispersed to obtain a positive electrode slurry. The slurry was coated on an aluminum foil current collector and roll-pressed at a positive electrode compaction density of 4.12 g/cm³ to obtain a positive electrode sheet;
2) Artificial graphite, styrene butadiene rubber (SBR), sodium carboxymethyl cellulose, and conductive carbon black were mixed in a weight ratio of 94%:3%:2%:1%, and the mixture was dispersed in water and mixed by double planetary mixer to obtain a negative electrode slurry. The slurry was coated onto a copper current collector, followed by roll-pressing and drying; and
3) Then the positive electrode sheet, the negative electrode sheet and the separator were assembled into a lithium ion battery, into which a non-aqueous electrolyte was injected.

Where, the electrolyte is a conventional electrolyte known in the art, in which ethylene carbonate (abbreviated as EC), diethyl carbonate (abbreviated as DEC) and propylene carbonate (abbreviated as PC) were mixed in a mass ratio of 2:5:3, and then fluoroethylene carbonate (abbreviated as FEC) accounting for 5% of the total mass of the electrolyte, lithium hexafluorophosphate (abbreviated as LiPF₆) accounting for 13% of the total mass of the electrolyte, and an additive represented by Formula T were further added, where a content of the additive is 2% of the total mass of the electrolyte.

The capacity retention rate of each lithium ion battery obtained was tested as follows: at 25°C, charge to 4.50V at constant current at a charging rate of 1C, then charge to 4.50V at constant voltage at a charging rate of 0.05C, and then discharge to 3.0V at a discharging rate of 1C, and then repeat this charging and discharging cycle for 500 times, and then measure a discharging capacity at the first cycle and a discharging capacity at 500th cycle, and calculate a capacity retention rate Q2 after 500 cycles according to the following formula. The results are shown in Table 4. 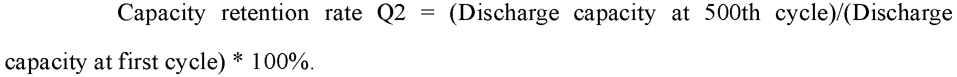 Capacity retention rate Q2 = (Discharge capacity at 500th cycle)/(Discharge capacity at first cycle) * 100%.

### Test example 3

After the positive electrode active materials in all the Examples and Comparative examples were each made into a positive electrode sheet, and then were assembled together with a negative electrode sheet, an electrolyte, and a separator according to the following method to obtain a button cell. The method includes:

The positive electrode active materials in the Examples and Comparative examples were each mixed with conductive carbon black (SP) and PVDF at a weight ratio of 80%: 10%: 10%, respectively, and dispersed to obtain a positive electrode slurry. The slurry was coated on an aluminum foil current collector, and roll-pressed to prepare a positive electrode sheet. Then, the positive electrode sheet was punched with a mould to form a small disc with a diameter of 12 mm. After drying and weighing treatment, it was assembled together with a 2025 button cell case, Li metal disc as negative electrode and conventional high voltage lithium cobaltate as electrolyte in a glove box under Ar protective atmosphere to obtain the button cell.

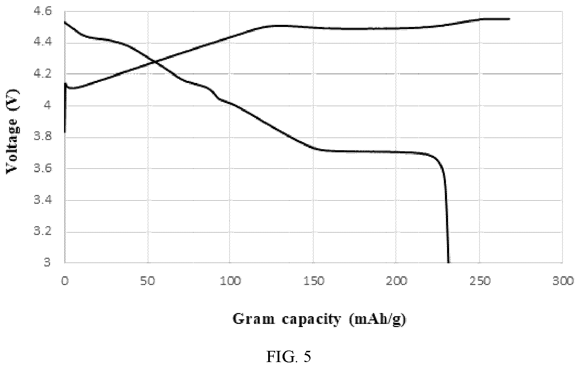

Each obtained button cell was was left to standing for 4 h in a conventional environment, and then was subjected to a charge and discharge capacity test for first time. The test conditions are as below: charging to 4.55 V at 0.1 C, constant voltage charging to 0.025 C and cutting off, standing for 3 minutes, and then discharging to 3.0 V at 0.1 C. During the discharge process, discharge gram capacity C0 for first time and charge gram capacity for first time were recorded respectively, and first-time efficiency was calculated. The results are shown in Table 4. FIG. 5 is a charge-discharge curve of a button cell assembled from the positive electrode active material of Example 1 according to the present application.

### Test example 4

The lithium ion battery in Test example 1 without cycling (after chemical formation) was discharged at a current of 1/10 of a rated capacity to 3 .0 V, and then its voltage was tested and found to be 3.0-3.6 V. Then the lithium ion battery was disassembled, the positive electrode sheet was removed, soaked by using dimethyl carbonate (DMC) for 3h, dried naturally in a drying room, and then placed in a muffle furnace and calcinated for 3h at 300°C, then a sample powder was obtained after sieving at 200 mesh. The contents of Li element and Co element in the Examples and Comparative examples were measured by ICP to obtain a lithium-cobalt molar ratio m2_{actual} . The results are shown in Table 4.

**Table 3**

| Lithium metal oxide | Composition of compound containing cobalt and sodium | I1/I2 | C1/C0 | C2/C0 | Q1 |
|---|---|---|---|---|---|
| | | | % | | |
| 1#Li_{0.71}Na_{0.02}K_{0.003}CoO₂ | Na_{0.69}K_{0.003}CoO₂ | 9.89 | 11.35 | 29.86 | 97.3 |
| 2#Li_{0.71}Na_{0.02}Co_{0.97}Al_{0.03}O₂ | Na_{0.69}Co_{0.97}Al_{0.03}O₂ | 8.39 | 11.38 | 29.67 | 97.9 |
| 3#Li_{0.71}Na_{0.02}K_{0.005}Co_{0.97}Mg_{0.03}O₂ | Na_{0.69}K_{0.005}Co_{0.97}Mg_{0.03}O₂ | 7.59 | 12.01 | 30.68 | 98.1 |
| 4#Li_{0.71}Na_{0.02}K_{0.003}Co_{0.97}Ti_{0.03}O₂ | Na_{0.69}K_{0.003}Co_{0.97}Ti_{0.03}O₂ | 8.05 | 11.24 | 29.59 | 97.9 |
| 5#Li_{0.71}Na_{0.02}Co_{0.96}B_{0.04}O₂ | Na_{0.69}Co_{0.96}B_{0.04}O₂ | 11.63 | 11.15 | 29.54 | 98.3 |
| 6#Li_{0.71}Na_{0.02}Co_{0.96}W_{0.04}O₂ | Na_{0.69}Co_{0.96}W_{0.04}O₂ | 7.99 | 12.04 | 30.35 | 97.76 |

**Table 4**

| | Charge Gram Capacity (mAh/g) | Discharge Gram Capacity CO (mAh/g) | First-time efficiency (%) | Q2 | m2_{actual} |
|---|---|---|---|---|---|
| Example 1 | 267.7 | 231 | 86.3% | 91.23% | 0.9455 |
| Example 2 | 272.4 | 234 | 85.9% | 90.27% | 0.9621 |
| Example 3 | 269.3 | 232 | 86.2% | 90.89% | 0.9510 |
| Example 4 | 254.0 | 235 | 92.5% | 89.94% | 0.8944 |
| Example 5 | 257.6 | 238 | 92.4% | 89.05% | 0.9072 |
| Example 6 | 258.8 | 239 | 92.4% | 88.92% | 0.9114 |
| Example 7 | 265.5 | 231 | 87.0% | 90.07% | 0.9372 |
| Example 8 | 270.0 | 234 | 86.7% | 88.24% | 0.9534 |
| Example 9 | 267.0 | 232 | 86.9% | 88.71% | 0.9426 |
| Example 10 | 264.0 | 234 | 88.6% | 87.12% | 0.9314 |
| Example 11 | 296.7 | 234 | 78.9% | 86.89% | 1.0511 |
| Example 12 | 251.6 | 234 | 93.0% | 87.75% | 0.8857 |
| Example 13 | 252.2 | 234 | 92.8% | 85.83% | 0.8882 |
| Example 14 | 251.4 | 233 | 92.7% | 90.86% | 0.8853 |
| Example 15 | 253.5 | 235 | 92.7% | 90.79% | 0.8927 |
| Example 16 | 250.5 | 232 | 92.6% | 91.03% | 0.8822 |
| Example 17 | 252.2 | 233.5 | 92.6% | 91.22% | 0.8880 |
| Example 18 | 249.9 | 231.5 | 92.6% | 90.99% | 0.8801 |
| Example 19 | 188.1 | 179.3 | 95.3% | 67.3% | 0.6318 |
| Comparative example 1 | 186.7 | 177.4 | 95.0% | 23.54% | 0.6237 |
| Comparative example 2 | 186.5 | 177.5 | 95.2% | 34.56% | 0.9704 |

From Tables 2-4, it can be seen that the positive electrode active materials of the present application are beneficial to improving the discharge capacity and cycle performance of lithium ion batteries.

## Claims

1. A positive electrode active material, wherein the positive electrode active material comprises a lithium metal oxide and a lithium-rich material;
the lithium metal oxide has a molecular formula represented by Formula 1 or Formula 2, and in an X-ray diffraction pattern, the lithium metal oxide is a space group Cmca of a cubic crystal system, and has a 002 peak at 2θ of 17.9°- 18.1° and a 131 peak at 2θ of 67.0° to 67.5°;
Li_{n1-y1}Na_{y1}Co_{1-a1-b1}M1_{b1}M2ₐ₁O₂ Formula 1
Li_{n2-y2-b2}Na_{y2}Co₁₋ₐ₂M1_{b2}M2ₐ₂O₂ Formula 2
in the formula 1, 0.6 ≤ n1 ≤ 0.8, 0 < y1 ≤ 0.05, 0 ≤ a1 ≤ 0.1, 0 < b1 ≤ 0.1, 0 < b1/1-a1-b1 < 0.1;
in the formula 2, 0.6 ≤ n2 ≤ 0. 8, 0 < y2 ≤ 0. 05, 0 ≤ a2 ≤ 0. 1, 0 < b2 ≤ 0. 02,
wherein M1 comprises at least one of Te, W, Al, B, P, and K, and M2 is a doping element different from M1; and
the lithium-rich material comprises at least one of Li₂NiO₂, Li₆FeO₆, Li₂MoO₃, Li₆CoO₄, Li₂CuO₂, Li₂O, Li₃N, LiF, Li₅AlO₄, Li₅FeO₄, and Li₂C₂O₄:
wherein
the lithium metal oxide has a median particle diameter Dv50 of 12-20 µm; and
the lithium-rich material has a median particle diameter Dv50 of 3-12 µm.

2. The positive electrode active material according to claim 1, wherein the positive electrode active material has a lithium-cobalt molar ratio m1 and m1 ≥ 0. 95; preferably, 0.95 ≤ m1 ≤ 1. 5.

3. The positive electrode active material according to claim 1 or 2, wherein a content of the lithium-rich material in a mixture is 0.5-40% by mass, and the mixture comprises the lithium metal oxide and the lithium-rich material; preferably, the content of the lithium-rich material in the mixture is 5-25% by mass.

4. The positive electrode active material according to claim3, wherein the lithium-rich material comprises at least one of Li₂NiO₂ and Li₆FeO₆; preferably the content of the lithium-rich material in the mixture is 9%-20% by mass.

5. The positive electrode active material according to any one of claims 1-4, wherein in the lithium metal oxide, a peak intensity of the 002 peak is I1, a peak intensity of the 131 peak is 12, and 11/12 ≥ 3; preferably, I1/I2 ≥ 4; more preferably, I1/I2 ≥ 6.

6. The positive electrode active material according to any one of claims 1-5, wherein a surface of the lithium metal oxide is at least partially covered with a coating layer.

7. The positive electrode active material according to any one of claims 1-6, wherein
a half-cell comprising the lithium metal oxide has a discharge capacity ratio of C1/CO ≥ 9% in a first stage and a discharge capacity ratio of C2/C0 ≥ 25% in a second stage;
wherein C0 is a discharge capacity of the half-cell comprising the lithium metal oxide when a discharge treatment is performed at a voltage of 3.0 to 4.55 V; and in the discharge treatment, a capacity discharged by the half-cell when the half-cell is discharged from an initial discharge voltage to 4.4 V is defined as C1, and a capacity discharged by the half-cell when the half-cell is discharged from 3.8 V to 3.7 V is defined as C2.

8. The positive electrode active material according to claim 1 or 2, wherein a lithium-cobalt molar ratio of the positive electrode active material after being charged and discharged is m2, and m2 ≥ 0. 85; preferably, 0.85 ≤ m2 ≤ 1.1.

9. A positive electrode sheet, comprising the positive electrode active material according to any one of claims 1-8.

10. The positive electrode sheet according to claim 9, wherein the positive electrode sheet comprises a positive electrode active layer, and the positive electrode active layer has a compaction density of greater than or equal to 3.5 g/cm³.

11. A lithium ion battery, comprising the positive electrode active material according to any one of claims 1- 8 or the positive electrode sheet according to claim 9 or 10.

12. The lithium ion battery according to claim 11, wherein a negative electrode sheet in the lithium ion battery comprises a stacked negative electrode current collector, and also a negative electrode active layer and a lithium material layer, both of which are disposed on at least one surface of the negative electrode current collector, and the negative electrode active layer is adjacent to the negative electrode current collector.

13. The lithium ion battery according to claim 12, wherein the negative electrode sheet further comprises lithium metal.

14. The lithium ion battery according to any one of claims 11-13, wherein an operating voltage of the lithium ion battery is ≥ 4.50 V.

## Patentansprüche

1. Positivelektrodenaktivmaterial, wobei das Positivelektrodenaktivmaterial ein Lithium-Metalloxid und ein lithiumreiches Material aufweist;
das Lithium-Metalloxid eine durch Formel 1 oder Formel 2 dargestellte Molekülformel aufweist und in einem Röntgenbeugungsmuster das Lithium-Metalloxid einer Raumgruppe Cmca eines kubischen Kristallsystems angehört und einen 002-Peak bei 2θ von 17,9°-18,1° und einen 131-Peak bei 2θ von 67,0° bis 67,5° aufweist;
Li_{n1-y1}Na_{y1}Co_{1-a1-b1}M1_{b1}M2ₐ₁O₂ Formel 1
Li_{n2-y2-b2}Na_{y2}Co₁₋ₐ₂M1_{b2}M2ₐ₂O₂ Formel 2
in Formel 1 gilt: 0,6 ≤ n1 ≤ 0,8, 0 < y1 ≤ 0,05, 0 ≤ a1 ≤ 0,1, 0 < b1 ≤ 0,1, 0 < b1/1-a1-b1 < 0,1;
in Formel 2 gilt: 0,6 ≤ n2 ≤ 0,8, 0 < y2 ≤ 0,05, 0 ≤ a2 ≤ 0,1, 0 < b2 ≤ 0,02,
wobei M1 mindestens eines von Te, W, Al, B, P und K aufweist und M2 ein von M1 verschiedenes Dotierungselement ist; und
das lithiumreiche Material mindestens eines von Li₂NiO₂, Li₆FeO₆, Li₂MoO₃, Li₆CoO₄, Li₂CuO₂, Li₂O, Li₃N, LiF, Li₅AlO₄, Li₅FeO₄ und Li₂C₂O₄ aufweist;
wobei
das Lithium-Metalloxid einen medianen Partikeldurchmesser Dv50 von 12-20 µm aufweist; und
das lithiumreiche Material einen medianen Partikeldurchmesser Dv50 von 3-12 µm aufweist.

2. Positivelektrodenaktivmaterial nach Anspruch 1, wobei das Positivelektrodenaktivmaterial ein Lithium-Cobalt-Molverhältnis m1 aufweist und m1 ≥ 0,95 gilt; vorzugsweise gilt 0,95 ≤ m1 ≤ 1,5.

3. Positivelektrodenaktivmaterial nach Anspruch 1 oder 2, wobei ein Gehalt des lithiumreichen Materials in einem Gemisch 0,5-40 Massen-% beträgt und das Gemisch das Lithium-Metalloxid und das lithiumreiche Material aufweist; vorzugsweise beträgt der Gehalt des lithiumreichen Materials in dem Gemisch 5-25 Massen-%.

4. Positivelektrodenaktivmaterial nach Anspruch 3, wobei das lithiumreiche Material mindestens eines von Li₂NiO₂ und Li₆FeO₆ aufweist; vorzugsweise beträgt der Gehalt des lithiumreichen Materials in dem Gemisch 9-20 Massen-%.

5. Positivelektrodenaktivmaterial nach einem der Ansprüche 1-4, wobei in dem Lithium-Metalloxid eine Peakintensität des 002-Peaks I1 ist, eine Peakintensität des 131-Peaks I2 ist und I1/I2 ≥ 3 gilt; vorzugsweise gilt I1/I2 ≥ 4; stärker bevorzugt gilt I1/I2 ≥ 6.

6. Positivelektrodenaktivmaterial nach einem der Ansprüche 1-5, wobei eine Oberfläche des Lithium-Metalloxids zumindest teilweise mit einer Beschichtungsschicht bedeckt ist.

7. Positivelektrodenaktivmaterial nach einem der Ansprüche 1-6, wobei
eine Halbzelle, die das Lithium-Metalloxid aufweist, in einer ersten Stufe ein Entladekapazitätsverhältnis von C1/C0 ≥ 9 % und in einer zweiten Stufe ein Entladekapazitätsverhältnis von C2/C0 ≥ 25 % aufweist;
wobei C0 eine Entladekapazität der das Lithium-Metalloxid aufweisenden Halbzelle ist, wenn eine Entladebehandlung bei einer Spannung von 3,0 bis 4,55 V durchgeführt wird; und bei der Entladebehandlung eine von der Halbzelle entladene Kapazität, wenn die Halbzelle von einer anfänglichen Entladespannung auf 4,4 V entladen wird, als C1 definiert ist und eine von der Halbzelle entladene Kapazität, wenn die Halbzelle von 3,8 V auf 3,7 V entladen wird, als C2 definiert ist.

8. Positivelektrodenaktivmaterial nach Anspruch 1 oder 2, wobei ein Lithium-Cobalt-Molverhältnis des Positivelektrodenaktivmaterials nach dem Laden und Entladen m2 ist und m2 ≥ 0,85 gilt; vorzugsweise gilt 0,85 ≤ m2 ≤ 1,1.

9. Positivelektrodenblatt, aufweisend das Positivelektrodenaktivmaterial nach einem der Ansprüche 1 - 8.

10. Positivelektrodenblatt nach Anspruch 9, wobei das Positivelektrodenblatt eine Positivelektrodenaktivschicht umfasst und die Positivelektrodenaktivschicht eine Verdichtungsdichte aufweist, die größer als oder gleich 3,5 g/cm³ ist.

11. Lithium-Ionen-Batterie, aufweisend das Positivelektrodenaktivmaterial nach einem der Ansprüche 1-8 oder das Positivelektrodenblatt nach Anspruch 9 oder 10.

12. Lithium-Ionen-Batterie nach Anspruch 11, wobei ein Negativelektrodenblatt in der Lithium-Ionen-Batterie einen gestapelten Negativelektrodenstromkollektor und außerdem eine Negativelektrodenaktivschicht und eine Lithiummaterialschicht umfasst, die beide auf mindestens einer Oberfläche des Negativelektrodenstromkollektors angeordnet sind, und die Negativelektrodenaktivschicht benachbart zu dem Negativelektrodenstromkollektor ist.

13. Lithium-Ionen-Batterie nach Anspruch 12, wobei das Negativelektrodenblatt ferner Lithiummetall aufweist.

14. Lithium-Ionen-Batterie nach einem der Ansprüche 11 - 13, wobei eine Betriebsspannung der Lithium-Ionen-Batterie ≥ 4,50 V ist.

## Revendications

1. Matériau actif d'électrode positive, dans lequel le matériau actif d'électrode positive comprend un oxyde métallique de lithium et un matériau riche en lithium ;
l'oxyde métallique de lithium présente une formule moléculaire représentée par la formule 1 ou la formule 2 et, dans un diagramme de diffraction des rayons X, l'oxyde métallique de lithium appartient à un groupe d'espace Cmca d'un système cristallin cubique et présente un pic 002 à 2θ de 17,9°-18,1° et un pic 131 à 2θ de 67,0° à 67,5° ;
Li_{n1-y1}Na_{y1}Co_{1-a1-b1}M1_{b1}M2ₐ₁O₂ Formule 1
Li_{n2-y2-b2}Na_{y2}Co₁₋ₐ₂M1_{b2}M2ₐ₂O₂ Formule 2
dans la formule 1, 0,6 ≤ n1 ≤ 0,8, 0 < y1 ≤ 0,05, 0 ≤ a1 ≤ 0,1, 0 < b1 ≤ 0,1, 0 < b1/1-a1-b1 < 0,1 ;
dans la formule 2, 0,6 ≤ n2 ≤ 0,8, 0 < y2 ≤ 0,05, 0 ≤ a2 ≤ 0,1, 0 < b2 ≤ 0,02,
où M1 comprend au moins l'un des éléments Te, W, Al, B, P et K, et M2 est un élément dopant différent de M1 ; et
le matériau riche en lithium comprend au moins l'un des composés Li₂NiO₂, Li₆FeO₆, Li₂MoO₃, Li₆CoO₄, Li₂CuO₂, Li₂O, Li₃N, LiF, Li₅AlO₄, Li₅FeO₄ et Li₂C₂O₄ ;
dans lequel
l'oxyde métallique de lithium présente un diamètre médian des particules Dv50 de 12-20 µm ; et
le matériau riche en lithium présente un diamètre médian des particules Dv50 de 3-12 µm.

2. Matériau actif d'électrode positive selon la revendication 1, dans lequel le matériau actif d'électrode positive présente un rapport molaire lithium-cobalt m1 et m1 ≥ 0,95 ; de préférence, 0,95 ≤ m1 ≤ 1,5.

3. Matériau actif d'électrode positive selon la revendication 1 ou 2, dans lequel une teneur en matériau riche en lithium dans un mélange est de 0,5-40 % en masse, et le mélange comprend l'oxyde métallique de lithium et le matériau riche en lithium ; de préférence, la teneur en matériau riche en lithium dans le mélange est de 5-25 % en masse.

4. Matériau actif d'électrode positive selon la revendication 3, dans lequel le matériau riche en lithium comprend au moins l'un des composés Li₂NiO₂ et Li₆FeO₆ ; de préférence, la teneur en matériau riche en lithium dans le mélange est de 9 % à 20 % en masse.

5. Matériau actif d'électrode positive selon l'une quelconque des revendications 1-4, dans lequel, dans l'oxyde métallique de lithium, une intensité de pic du pic 002 est I1, une intensité de pic du pic 131 est I2, et I1/I2 ≥ 3 ; de préférence, I1/I2 ≥ 4 ; plus préférablement, I1/I2 ≥ 6.

6. Matériau actif d'électrode positive selon l'une quelconque des revendications 1-5, dans lequel une surface de l'oxyde métallique de lithium est au moins partiellement recouverte d'une couche de revêtement.

7. Matériau actif d'électrode positive selon l'une quelconque des revendications 1-6, dans lequel
une demi-cellule comprenant l'oxyde métallique de lithium présente un rapport de capacité de décharge de C1/C0 ≥ 9 % à un premier stade et un rapport de capacité de décharge de C2/C0 ≥ 25 % à un second stade ;
où C0 est une capacité de décharge de la demi-cellule comprenant l'oxyde métallique de lithium lorsqu'un traitement de décharge est effectué à une tension de 3,0 à 4,55 V ; et, dans le traitement de décharge, une capacité déchargée par la demi-cellule lorsque la demi-cellule est déchargée d'une tension de décharge initiale à 4,4 V est définie comme C1, et une capacité déchargée par la demi-cellule lorsque la demi-cellule est déchargée de 3,8 V à 3,7 V est définie comme C2.

8. Matériau actif d'électrode positive selon la revendication 1 ou 2, dans lequel un rapport molaire lithium-cobalt du matériau actif d'électrode positive après que celui-ci a été chargé et déchargé est m2, et m2 ≥ 0,85 ; de préférence, 0,85 ≤ m2 ≤ 1,1.

9. Feuille d'électrode positive, comprenant le matériau actif d'électrode positive selon l'une quelconque des revendications 1-8.

10. Feuille d'électrode positive selon la revendication 9, dans laquelle la feuille d'électrode positive comprend une couche active d'électrode positive, et la couche active d'électrode positive présente une densité de compactage supérieure ou égale à 3,5 g/cm³.

11. Batterie lithium-ion, comprenant le matériau actif d'électrode positive selon l'une quelconque des revendications 1-8 ou la feuille d'électrode positive selon la revendication 9 ou 10.

12. Batterie lithium-ion selon la revendication 11, dans laquelle une feuille d'électrode négative dans la batterie lithium-ion comprend un collecteur de courant d'électrode négative empilé, ainsi qu'une couche active d'électrode négative et une couche de matériau de lithium, toutes deux disposées sur au moins une surface du collecteur de courant d'électrode négative, et la couche active d'électrode négative est adjacente au collecteur de courant d'électrode négative.

13. Batterie lithium-ion selon la revendication 12, dans laquelle la feuille d'électrode négative comprend en outre du lithium métallique.

14. Batterie lithium-ion selon l'une quelconque des revendications 11-13, dans laquelle une tension de fonctionnement de la batterie lithium-ion est ≥ 4,50 V.
